# EUROPÄISCHE PATENTSCHRIFT

(11) **EP 2 544 341 B1**
(45) Veröffentlichungstag und Bekanntmachung des Hinweises auf die Patenterteilung: **29.11.2017**
(21) Anmeldenummer: 12173427.1
(22) Anmeldetag: 25.06.2012
(51) Int. Cl.: H02K 9/06, H02K 7/10, B64D 35/06, H02K 7/112

(54) **Elektrische Maschine mit zwei Axiallüftern**
Electric machine with two axial fans
Machine électrique avec deux ventilateurs axiaux

(30) Priorität: 05.07.2011 DE 102011078671
(43) Veröffentlichungstag der Anmeldung: 09.01.2013
(73) Patentinhaber: Siemens Aktiengesellschaft, 80333 München (DE)
(72) Erfinder: Büttner, Klaus, 97618 Hollstadt (DE); Wöhner, Norbert, 97618 Heustreu (DE)

(56) Entgegenhaltungen:
- DE-A1- 1 488 700
- US-A- 3 003 073
- US-A- 3 426 261

## Beschreibung

Die vorliegende Erfindung betrifft eine elektrische Maschine mit einem Stator, einem Rotor, der mit dem Stator magnetisch zusammenwirkt, einer Welle, auf der der Rotor angeordnet ist und die an dem Stator zur Drehung in eine erste Drehrichtung und in eine entgegensetzte zweite Drehrichtung gelagert ist, und einem Axiallüfter, der für eine Bewegung in der ersten Drehrichtung mit der Welle drehfest verbunden ist.

Elektrische Maschinen (insbesondere Elektromotoren und Generatoren) besitzen zur Optimierung der Wärmeabfuhr häufig ein Kühlsystem mit einem Lüfter und einer Lüfterhaube. Der Lüfter saugt die Kühlluft an, welche dann über Kühlrippen des Gehäuses der elektrischen Maschine geblasen wird. Für eine gute Kühlwirkung muss eine ausreichende Luftmenge bzw. Kühlmittelmenge gefördert werden.

Die Kühlung elektrischer Maschinen ist mit unterschiedlichen Lüftern möglich. Beispielsweise können zur Kühlung Radiallüfter und Axiallüfter verwendet werden, die direkt auf der Motorwelle montiert werden. Radiallüfter besitzen Lüfterflügel, die radial nach außen stehen und das Kühlmittel ebenso radial nach außen fördern sollen. Die Förderung des Kühlmittels durch Radiallüfter ist unabhängig von der Drehrichtung der elektrischen Maschine.

Bei Axiallüftern sind die Lüfterflügel mit einer bestimmten Steigung an der Lüfternabe befestigt. Der Axiallüfter fördert das Kühlmittel in axialer Richtung. Die Förderrichtung hängt jedoch von der Drehrichtung der Welle und von der Steigungsrichtung der Lüfterflügel ab. Generell fördert der Axiallüfter mehr Kühlmittel als der Radiallüfter. Um die Vorteile von Axiallüftern (hohe Luftmenge und geringes Geräusch) zu nutzen, musste der Lüfter bislang immer der Drehrichtung der elektrischen Maschine angepasst werden.

Darüber hinaus ist die Kühlung einer elektrischen Maschine mithilfe eines Fremdlüfters möglich. Fremdlüfter sind in der Regel als Axiallüfter ausgeführt. Sie verfügen über einen eigenen Antrieb mit fester Drehrichtung. Daher erfolgt die Kühlung unabhängig von der Drehrichtung der Welle der elektrischen Maschine. Allerdings ist für den Fremdlüfter eben ein eigener Antrieb notwendig.

Aus der Druckschrift DE 70 32 537 U ist eine Kühlvorrichtung für Bremsmotoren bekannt. Die Kühlvorrichtung dient zum Kühlen von Elektrobremsmotoren mit Lüfterrädern. Die Lüfterräder sind über Freiläufe auf oder an den beweglichen Teilen, z.B. Motorenwellen, befestigt, so dass beim Abbremsen eines Motors das Lüfterrad weiterläuft. Das Lüfterrad kann einen auf Rechts- oder Linkslauf umschaltbaren Freilauf aufweisen.

Darüber hinaus beschreibt die Patentschrift DE 431 682 A einen Ventilator für umkehrbare Luftförderung mit zwei gleichachsig angeordneten Luftschrauben von entgegengesetzter Steigung. Die beiden Schrauben laufen im gleichen Sinne um und sind derart hintereinander angeordnet, dass in der Richtung des beabsichtigten Luftstroms die wirksame Schraube vor der in diesem Luftstrom nur wenig wirksamen Schraube liegt. Insbesondere liegt die eine Schraube auf der einen Seite der zu kühlenden Maschine und die andere Schraube auf der anderen Seite der Maschine. Ferner können die Schrauben abkuppelbar sein, so dass nur die für die betreffende Stromrichtung gebaute Schraube von der Antriebsvorrichtung gedreht wird. Das Kühlmittel, insbesondere Luft, muss also von beiden axialen Seiten auf die Maschine zuströmen können, damit bei beiden Drehrichtungen eine Kühlung gewährleistet werden kann.

Des Weiteren beschreibt die US 3 003 073 B ein portables elektrisches Werkzeug, welches ein zylindrisches Motorgehäuse, in welchem ein Elektromotor angeordnet ist, und ein Getriebegehäuse aufweist, in welchem das Getriebe angeordnet ist. Der Elektromotor weist eine Welle auf, auf welcher ein erster und zwei Lüfter angeordnet sind. Dabei dient einer der Lüfter zum Kühlen des Elektromotors in dem Motorgehäuse und der andere Lüfter dient zum Kühlen des Getriebes in dem Getriebegehäuse.

Schließlich beschreibt die DE 14 88 700 A1 einen Elektromotor mit Fremdbelüftung. Der Elektromotor umfasst einen als Außenläufermotor ausgebildeten Hilfsmotor, welcher einen Radiallüfter antreibt und durch welchen die Welle des Hauptmotors hindurchgeführt ist. Dabei liegen die bis in die Nähe der Welle des Hauptmotors heruntergezogenen Flügel des Radiallüfters in axialer Richtung neben dem Hilfsmotor. Der Lüfter kann zusätzlich über eine Freilaufkupplung auf der Hauptmotorwelle gelagert sein.

Die Aufgabe der vorliegenden Erfindung besteht somit darin, unabhängig von der Drehrichtung eine hochwirksame Kühlung einer elektrischen Maschine bei möglichst reduziertem Bauraum erzielen zu können.

Erfindungsgemäß wird diese Aufgabe gelöst durch eine elektrische Maschine mit einem Stator, einem Rotor, der mit dem Stator magnetisch zusammenwirkt, einer Welle, auf der der Rotor angeordnet ist und die an dem Stator zur Drehung in eine erste Drehrichtung und in eine entgegengesetzte zweite Drehrichtung gelagert ist, und einem ersten Axiallüfter, der für eine Bewegung in der ersten Drehrichtung mit der Welle drehfest verbunden ist, wobei auf der gleichen Seite des Rotors wie der erste Axiallüfter ein zweiter Axiallüfter auf der Welle drehfest für eine Bewegung in der zweiten Drehrichtung angeordnet ist, der erste Axiallüfter bezüglich der zweiten Drehrichtung auf der Welle Freilauf besitzt und der zweite Axiallüfter bezüglich der ersten Drehrichtung auf der Welle Freilauf besitzt.

In vorteilhafter Weise besitzt die elektrische Maschine demnach zwei hintereinander auf der Welle angeordnete Axiallüfter auf einer Seite (Belüftungsseite; B-Seite) der Maschine. Es ist somit unabhängig von der Drehrichtung ein Kühlmittelzufluss nur von der Belüftungsseite her notwendig. Der Freilauf der Axiallüfter gewährleistet dabei, dass für jede der Drehrichtungen nur spezifisch einer der Axiallüfter direkt angetrieben wird. Der andere Axiallüfter befindet sich dann im Freilauf und kann sich mitdrehen oder entgegengesetzt laufen. Das Prinzip der Axiallüfter gewährleistet eine hohe Kühlleistung.

Vorzugsweise besitzt der erste Axiallüfter eine Nabe und daran befestigt einen Lüfterflügel, der am Umfang der Nabe eine erste Steigung aufweist, wobei der zweite Axiallüfter eine Nabe und daran befestigt einen Lüfterflügel aufweist, der am Umfang der Nabe im montierten Zustand der beiden Axiallüfter eine der ersten Steigung entgegengesetzt gerichtete zweite Steigung aufweist. Sind die beiden Steigungen in den entgegengesetzten Richtungen betragsmäßig gleich groß, so lässt sich bei gleicher Flügelgeometrie in beiden Drehrichtungen die gleiche Förderleistung erzielen.

Entsprechend einer Ausführungsform sind die beiden Axiallüfter jeweils mit einem Wälzlager mit Rücklaufsperre auf der Welle gelagert. Dadurch kann auf einfache Weise gewährleistet werden, dass die Lüfter jeweils nur in eine vorbestimmte Richtung angetrieben werden, während in der anderen Drehrichtung Freilauf vorliegt.

Gemäß einer anderen Ausführungsform sind die beiden Axiallüfter jeweils mit einem Wälzlager auf der Welle gelagert, und eine Kupplungseinrichtung verbindet den ersten Axiallüfter bei der ersten Drehrichtung und den zweiten Axiallüfter bei der zweiten Drehrichtung formschlüssig oder reibschlüssig mit der Welle. Da die Kupplungseinrichtung von den Wälzlagern getrennt ist, kann eine qualitativ hochwertige Lagerung garantiert werden.

Speziell kann die Kupplungseinrichtung eine Schwungscheibe aufweisen, die zwischen den beiden Axiallüftern auf einem Gewinde der Welle drehbeweglich aufgebracht ist, und die auf den den Axiallüftern zugewandten Seiten jeweils eine Reibfläche besitzt, wobei die beiden Axiallüfter jeweils eine korrespondierte Reibfläche aufweisen, um damit abhängig von der Drehrichtung der Welle einen Reibschluss mit der Schwungscheibe herzustellen. Insbesondere beim Beschleunigen der Welle wird dann die Schwungscheibe auf den jeweilig gewünschten Axiallüfter gedrückt, so dass dieser durch Reibung in Drehbewegung versetzt wird.

Die Kupplungseinrichtung kann ferner einen Rastmechanismus aufweisen, mit dem die Schwungscheibe entweder an dem ersten Axiallüfter oder an dem zweiten Axiallüfter axial anliegend lösbar bei Reibschluss verrastet. Ähnlich einem Bajonettverschluss verschließt sich die Schwungscheibe beispielsweise durch das Anlaufdrehmoment an dem jeweiligen Axiallüfter und nimmt diesen mit.

Vorteilhafterweise sind die beiden Axiallüfter auf einer Belüftungsseite angeordnet, wobei zwischen dem Stator und den Axiallüftern ein Lagerschild eingesetzt ist, an dem die Welle gelagert ist, und wobei ein Kühlmittelstrom von jedem der Axiallüfter in axialer Richtung durch das Lagerschild hindurch direkt zum Stator und/oder Rotor förderbar ist. Dies hat den Vorteil, dass unabhängig von der Drehrichtung der elektrischen Maschine der von den Axiallüftern geförderte Kühlmittelstrom unmittelbar auf die zu kühlenden Komponenten ohne Umlenkung auftreffen kann.

Die vorliegende Erfindung wird nun anhand der beigefügten Zeichnungen näher erläutert, in denen zeigen:
- FIG 1: eine Ansicht der Belüftungsseite eines erfindungsgemäßen Motors;
- FIG 2: ein Kugellager mit Freilauf;
- FIG 3: einen Axiallüfter mit Kugellager einschließlich Rücklaufsperre;
- FIG 4: eine Ansicht der Belüftungsseite eines erfindungsgemäßen Elektromotors zweiter Ausführungsform;
- FIG 5: eine Prinzipskizze der in FIG 4 angedeuteten Kupplungseinrichtung in einer ersten Position;
- FIG 6: die Kupplungseinrichtung von FIG 5 in einer zweiten Position;
- FIG 7: einen Axiallüfter mit verdrehbarer Schwungscheibe in Draufsicht;
- FIG 8: eine Prinzipskizze einer Belüftung bei einer Motordrehrichtung und
- FIG 9: eine Prinzipskizze der Motorbelüftung bei entgegengesetzter Drehrichtung.

Die nachfolgend näher geschilderten Ausführungsbeispiele stellen bevorzugte Ausführungsformen der vorliegenden Erfindung dar.

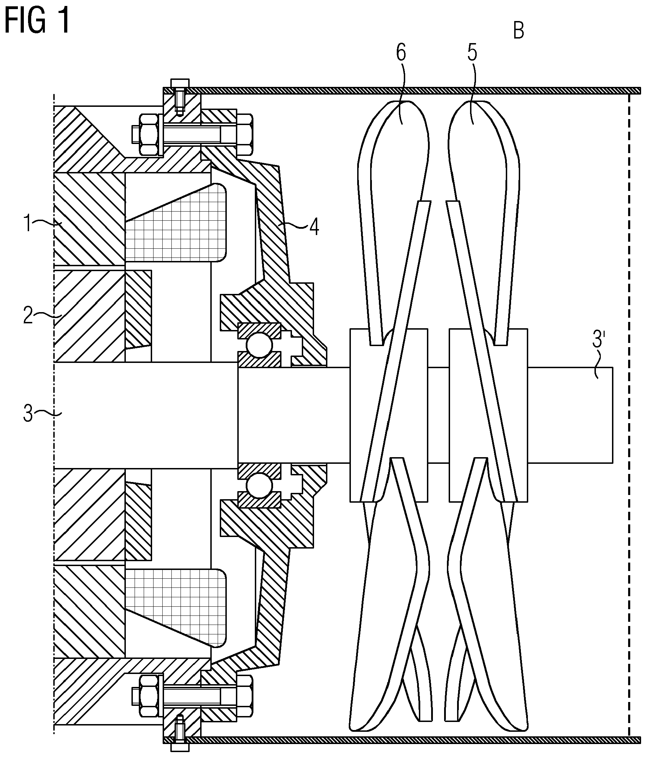

Das Beispiel von FIG 1 zeigt das belüftungsseitige Ende eines Längsschnitts durch eine elektrische Maschine (z.B. Motor oder Generator). Die elektrische Maschine besitzt einen Stator 1 und einen Rotor 2. Der Rotor 2 ist auf einer Welle 3 befestigt, die ihrerseits in einem Lagerschild 4, das Teil eines Gehäuses der elektrischen Maschine ist, drehbar gelagert ist. Ein Wellenstumpf 3' der Welle 3 ragt auf der Belüftungsseite B aus dem Lagerschild 4. Auf dem Wellenstumpf 3' sind erfindungsgemäß zwei Axiallüfter 5, 6 gelagert.

Die beiden Axiallüfter 5 und 6 sind jeweils für entgegengesetzte Drehrichtungen ausgelegt. Im vorliegenden Beispiel von FIG 1 ist der eine Axiallüfter 5 für Linkslauf und der Axiallüfter 6 für Rechtslauf ausgelegt. Nur bei dieser jeweils vorgegebenen Laufrichtung fördert der jeweilige Axiallüfter Luft bzw. Kühlmittel hin zum Gehäuse der elektrischen Maschine.

Es werden also zwei gegenläufig wirkende Axiallüfter 5, 6 bereitgestellt, wobei abhängig von der Drehrichtung einer von beiden vom Elektromotor bzw. Generator angetrieben wird, und der zweite Lüfter in dieser Richtung Freilauf besitzt. Beide Lüfter sind über eine entsprechende Lagerung drehbar mit der Welle 3 bzw. dem Wellenstumpf 3' verbunden.

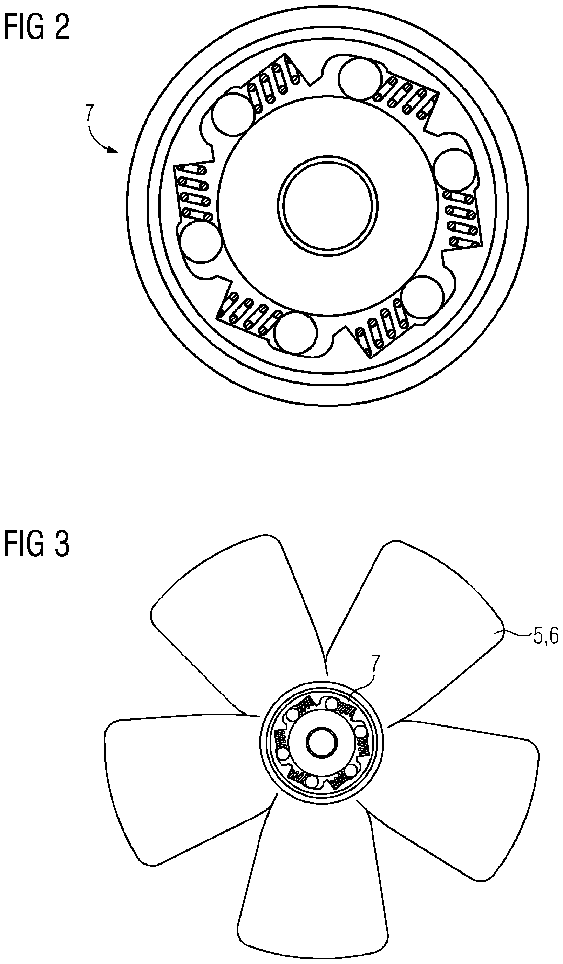

In einem ersten Ausführungsbeispiel erfolgt die Lagerung der Axiallüfter 5, 6 gemäß FIG 2 mithilfe eines Kugellagers 7 mit eingebauter Rücklaufsperre. Derartige Kugellager mit Rücklaufsperre sind hinreichend bekannt. In FIG 3 ist ein Axiallüfter 5, 6 dargestellt, dessen Nabe ein Kugellager 7 mit Rücklaufsperre aufweist. Für die beiden Axiallüfter 5, 6 sind die Kugellager 7 entsprechend zu orientieren, so dass sich für den einen Lüfter eine Rücklaufsperre in der einen Richtung und für den anderen Lüfter eine Rücklaufsperre in der anderen Richtung ergibt.

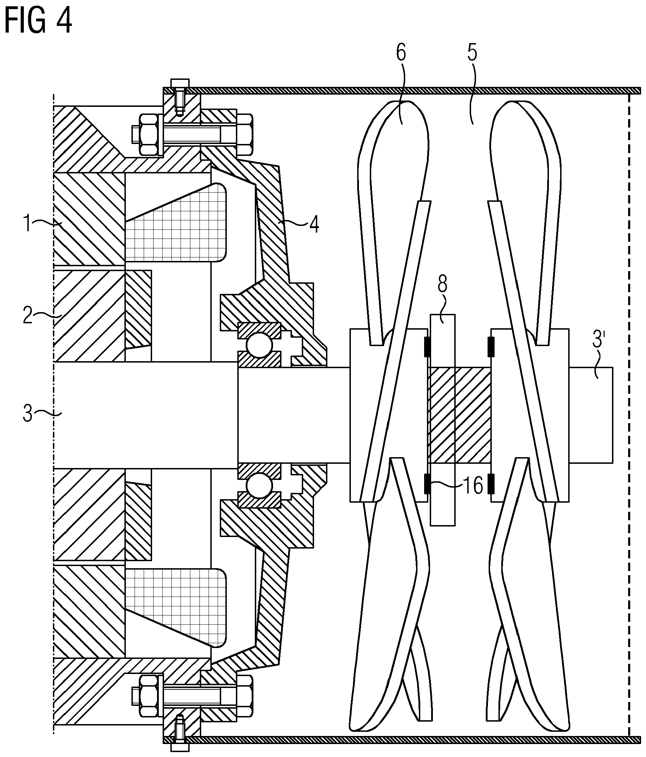

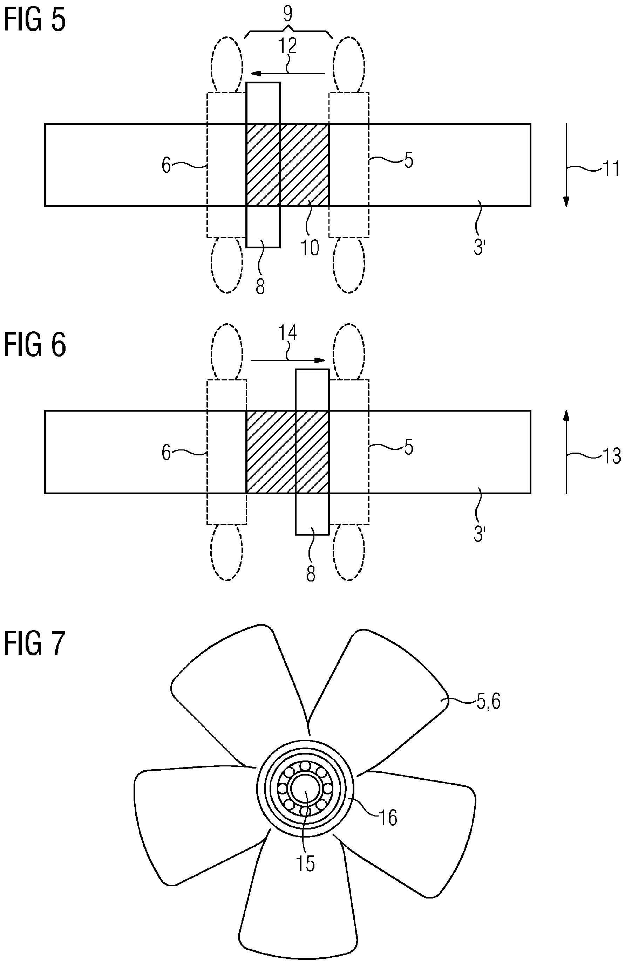

Gemäß einer alternativen Ausführungsform erfolgt die drehrichtungsabhängige, wechselseitige Kopplung der Lüfter 5, 6 über eine auf der Welle 3 sitzende Schwungscheibe 8 (vgl. FIG 4). Die Schwungscheibe 8 ist ringförmig und besitzt ein Innengewinde. Sie ist zwischen den beiden Lüftern 5 und 6 angeordnet. Ein Abschnitt 9 des Wellenstumpfs 3 zwischen den beiden Axiallüftern 5, 6 (vgl. FIG 5) besitzt ein zu dem Innengewinde der Schwungscheibe 8 korrespondierendes Außengewinde 10. Durch Drehbewegung kann sich die Schwungscheibe 8 auf dem Abschnitt 10 zwischen den beiden Axiallüftern 5 und 6 hin- und herbewegen, wie die Prinzipskizzen von FIG 5 und 6 andeuten.

In dem Beispiel von FIG 5 dreht sich die Welle 3 bzw. 3' gemäß Pfeil 11. Aufgrund des Gewindes 10 drückt die Schwungscheibe 8 zumindest während des Beschleunigens entsprechend Pfeil 12 nach links an den Axiallüfter 6. Die beiden Axiallüfter 5, 6 sind mithilfe von einfachen Wälzlagern auf dem Wellenstumpf 3' gelagert. Sobald nun Reibschluss zwischen der Schwungscheibe 8 und dem Axiallüfter 6 besteht, nimmt die Schwungscheibe 8 den Lüfter 6 mit, so dass auch dieser entsprechend der Drehbewegung 11 in Drehung versetzt wird.

Wird die elektrische Maschine bzw. die Welle 3 in entgegengesetzter Richtung gemäß Pfeil 13 von FIG 6 betrieben, so wird die Schwungscheibe 8 durch das Gewinde 10 nach rechts an den Axiallüfter 5 gedrückt, was Pfeil 14 verdeutlicht. Während der Axiallüfter 5 bei der Drehung gemäß FIG 5 noch frei war, wird er nun im Beispiel von FIG 6 bei der umgekehrten Drehung von der Schwungscheibe 8 durch Reibschluss gehalten und mitgenommen. Nun fördert der Axiallüfter 5 Luft bzw. Kühlmittel zur elektrischen Maschine. In diesem Zustand ist der andere Axiallüfter 6 auf dem Wellenstumpf 3' frei drehbar.

Damit Reibschluss zwischen der Schwungscheibe 8 und dem entsprechenden Axiallüfter 5, 6 auch während konstanter Umdrehungsgeschwindigkeit der Welle gegeben ist, kann vorgesehen sein, dass die Schwungscheibe 8 in der jeweiligen Endposition, in der Reibschluss gewährleistet ist, verrastet. Dies kann beispielsweise dadurch realisiert werden, dass das Gewinde in den jeweiligen Endpositionen sehr flach wird (insbesondere auch unendlich flach). Es ergäbe sich damit ein ähnliches Prinzip wie das eines Bajonettverschlusses. Bei einem Wechsel der Drehrichtung dreht sich dann die Schwungscheibe aufgrund ihrer eigenen Trägheit aus der Rastposition und wird dann zum gegenüberliegenden Axiallüfter geführt.

In FIG 7 ist ein Axiallüfter 5, 6 dargestellt, wie er in dem vorliegenden Ausführungsbeispiel eingesetzt werden kann. In der Nabe des Axiallüfters 5, 6 befindet sich ein einfaches Wälz- bzw. Kugellager 15. Damit sind die Axiallüfter 5, 6 grundsätzlich frei drehbar auf der Welle 3 gelagert. Darüber hinaus ist an der Nabe der Axiallüfter 5, 6 ein Reibring 16 befestigt. Wird die Schwungscheibe an den Reibring 16 gedrückt, so entsteht ein entsprechender Reibschluss und es kann über diesen Kraftschluss ein Drehmoment übertragen werden. In dem Beispiel von FIG 4 liegt die Schwungscheibe 8 beispielsweise an dem Reibring 16 des Lüfters 6 an, so dass dieser von der Welle 3 angetrieben wird. Der andere Axiallüfter 5 befindet sich entsprechend im Freilauf.

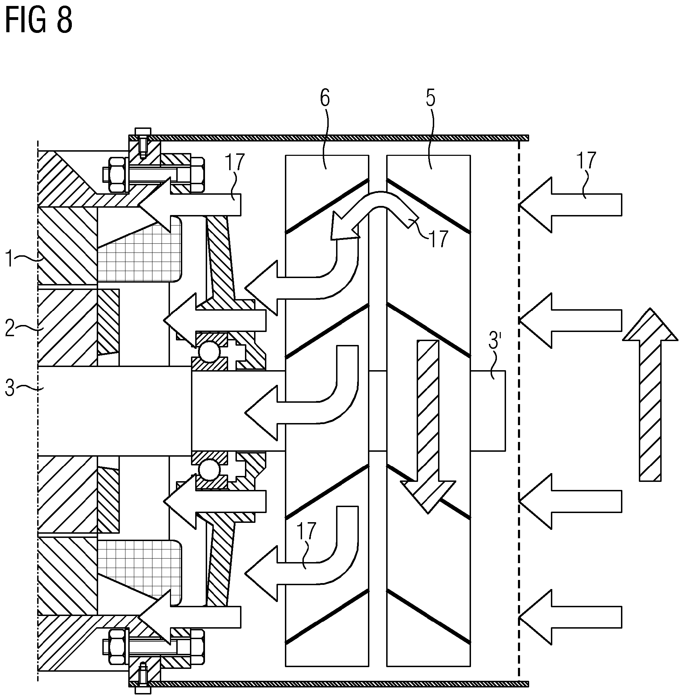

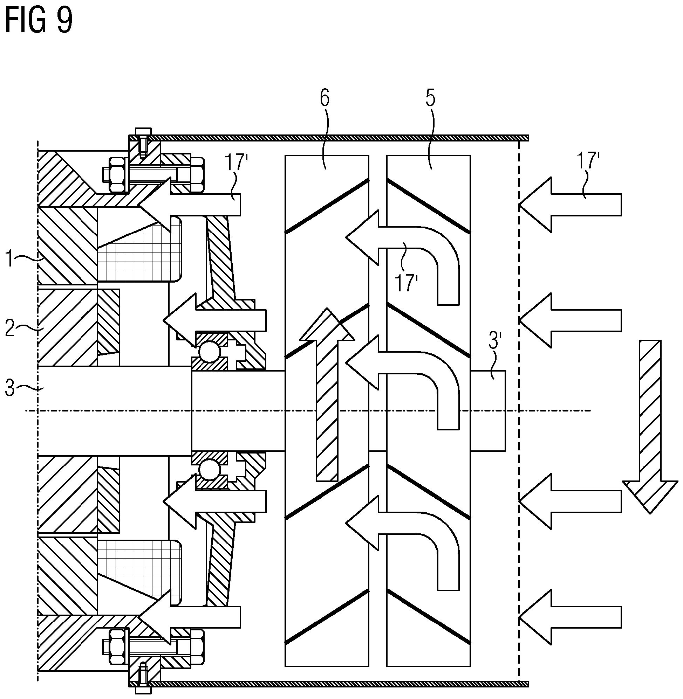

In den FIG 8 und 9 ist die Kühlstromsituation bei unterschiedlichen Drehrichtungen der elektrischen Maschine skizzenhaft dargestellt. Die Darstellung von FIG 8 entspricht im Wesentlichen derjenigen von FIG 1, wobei die beiden Axiallüfter 5, 6 lediglich schematisch angedeutet sind. In dem Beispiel von FIG 8 wird der Axiallüfter 6, dessen Schaufelräder in der Skizze eine positive Steigung besitzen, in Drehrichtung nach links angetrieben. Folglich entsteht durch den Axiallüfter 6 ein Luft- bzw. Kühlmittelstrom 17, der zum Gehäuse bzw. Lagerschild 4 der elektrischen Maschine gerichtet ist und dort in den Innenraum des Gehäuses eindringt. Der zweite Axiallüfter 5 befindet sich hier im Freilauf und bewegt sich entsprechend frei in dem Kühlmittelstrom 17. Er kann sich mit dem angetriebenen Axiallüfter 6 mitdrehen oder aber auch entgegengesetzt drehen.

Dreht sich die Welle gemäß FIG 9 in der entgegengesetzten Richtung, so wird der Axiallüfter 5 angetrieben und der Axiallüfter 6 befindet sich im Freilauf. Da der Axiallüfter 5 in der Darstellung von FIG 9 Lüfterflügel mit negativer Steigung besitzt, wird auch hier das Kühlmittel zum Lagerschild 4 der elektrischen Maschine hin gefördert. Es entsteht der dabei etwas abgewandelte Kühlmittelstrom 17'.

In vorteilhafter Weise wird also pro Drehrichtung der Welle der elektrischen Maschine nur einer der beiden Axiallüfter, die sich beide auf der Belüftungsseite der elektrischen Maschine befinden, aber gegenläufig wirken, angetrieben. Unabhängig von der Drehrichtung erfolgt dann immer ein passender Kühlmittelstrom auf das Gehäuse der elektrischen Maschine zu. Besonders vorteilhaft dabei ist also, dass die Kühlung der elektrischen Maschine von einer Seite ohne fremden Antrieb erfolgen kann.

## Patentansprüche

1. Elektrische Maschine mit
- einem Stator (1),
- einem Rotor (2), der mit dem Stator (1) magnetisch zusammenwirkt,
- einer Welle (3,3'), auf der der Rotor (2) angeordnet ist und die an dem Stator (1) zur Drehung in eine erste Drehrichtung und in eine entgegengesetzte zweite Drehrichtung gelagert ist,
- einem ersten Axiallüfter (5), der für eine Bewegung in der ersten Drehrichtung mit der Welle drehfest verbunden ist, und
- einem zweiten Axiallüfter (6), der auf der gleichen Seite des Rotors (2) wie der erste Axiallüfter (5) auf der Welle drehfest für eine Bewegung in der zweiten Drehrichtung angeordnet ist,
**dadurch gekennzeichnet, dass**
- der erste Axiallüfter (5) bezüglich der zweiten Drehrichtung auf der Welle Freilauf besitzt und
- der zweite Axiallüfter (6) bezüglich der ersten Drehrichtung auf der Welle Freilauf besitzt.

2. Elektrische Maschine nach Anspruch 1, wobei der erste Axiallüfter (5) eine Nabe und daran befestigt einen Lüfterflügel aufweist, der am Umfang der Nabe eine erste Steigung besitzt und wobei der zweite Axiallüfter (6) eine Nabe und daran befestigt einen Lüfterflügel aufweist, der am Umfang der Nabe im montierten Zustand der beiden Axiallüfter (5,6) eine der ersten Steigung entgegengesetzt gerichtete zweite Steigung aufweist.

3. Elektrische Maschine nach Anspruch 1 oder 2, wobei die beiden Axiallüfter (5,6) jeweils mit einem Wälzlager mit Rücklaufsperre (7) auf der Welle gelagert sind.

4. Elektrische Maschine nach Anspruch 1 oder 2, wobei die beiden Axiallüfter (5,6) jeweils mit einem Wälzlager (15) auf der Welle gelagert sind, und eine Kupplungseinrichtung (8) den ersten Axiallüfter (5) bei der ersten Drehrichtung (13) und den zweiten Axiallüfter (6) bei der zweiten Drehrichtung (11) formschlüssig oder reibschlüssig mit der Welle verbindet.

5. Elektrische Maschine nach Anspruch 4, wobei die Kupplungseinrichtung (8) eine Schwungscheibe aufweist, die zwischen den beiden Axiallüftern (5,6) auf einem Gewinde (10) der Welle drehbeweglich aufgebracht ist, und die auf den den Axiallüftern zugewandten Seiten jeweils eine Reibfläche besitzt, und wobei die beiden Axiallüfter (5,6) jeweils eine korrespondierende Reibfläche (16) aufweisen, um damit abhängig von der Drehrichtung der Welle einen Reibschluss mit der Schwungscheibe herzustellen.

6. Elektrische Maschine nach Anspruch 5, wobei die Kupplungseinrichtung (8) einen Rastmechanismus aufweist, mit dem die Schwungscheibe entweder an dem ersten Axiallüfter (5) oder an dem zweiten Axiallüfter (6) axial anliegend lösbar bei Reibschluss verrastet.

7. Elektrische Maschine nach einem der vorhergehenden Ansprüche, wobei die beiden Axiallüfter (5,6) auf einer Belüftungsseite (B) angeordnet sind, zwischen dem Stator (1) und den Axiallüftern (5,6) ein Lagerschild (4) eingesetzt ist, an dem die Welle (3,3') gelagert ist, und ein Kühlmittelstrom (17, 17') von jedem der Axiallüfter (5,6) in axialer Richtung durch das Lagerschild hindurch direkt zum Stator und/oder Rotor förderbar ist.

## Claims

1. Electrical machine with
- a stator (1),
- a rotor (2), that interacts magnetically with the stator (1),
- a shaft (3, 3'), on which the rotor (2) is disposed and that is supported on the stator (1) for rotation in a first direction of rotation and in an opposing second direction of rotation,
- a first axial fan (5) that is connected to rotate along with the shaft for a movement in the first direction of rotation,
- a second axial fan (6) that is disposed on the same side of the rotor (2) as the first axial fan (5) to rotate along with the shaft for a movement in the second direction of rotation,
**characterised in that**
- the first axial fan (5) possesses a freewheeling capability on the shaft in relation to the second direction of rotation and
- the second axial fan (6) possesses a freewheeling capability on the shaft in relation to the first direction of rotation.

2. Electrical machine according to claim 1, wherein the first axial fan (5) has a boss and a fan wheel connected thereto, which on the circumference of the boss possesses a first inclination and wherein the second axial fan (6) has a boss and a fan wheel connected thereto, which on the circumference of the boss in the installed state of the two axial fans (5, 6) has a second inclination opposed to the direction of the first inclination.

3. Electrical machine according to claim 1 or 2, wherein the two axial fans (5, 6) are each supported on the shaft with a roller bearing with return stop (7).

4. Electrical machine according to claim 1 or 2, wherein the two axial fans (5, 6) are each supported on the shaft with a roller bearing (15), and a clutch device (8) connects the first axial fan (5) in the first direction of rotation (13) and the second axial fan (6) in the second direction of rotation (11) with the shaft by means of a form fit or friction fit.

5. Electrical machine according to claim 4, wherein the clutch device (8) has a flywheel which is attached between the two axial fans (5, 6) on a thread (10) of the shaft to allow rotational movement, and which possesses a frictional surface on the sides facing towards the axial fans in each case, and wherein the two axial fans (5, 6) each have a corresponding frictional surface (16) in order thereby, regardless of the direction of rotation of the shaft, to establish a frictional connection to the flywheel.

6. Electrical machine according to claim 5, wherein the clutch device (8) has a latching mechanism with which the flywheel latches during a frictional connection axially against and releasably either onto the first axial fan (5) or onto the second axial fan (6).

7. Electrical machine according to one of the preceding claims, wherein the two axial fans (5, 6) are disposed on a ventilation side (B), a bearing bracket (4) on which the shaft (3, 3') is supported is inserted between the stator (1) and the axial fans (5, 6), and a flow of cooling medium (17, 17') able to be conveyed from each of the axial fans (5, 6) in the axial direction through the bearing bracket directly to the stator and/or rotor.

## Revendications

1. Machine électrique comprenant
- un stator (1),
- un rotor (2), qui coopère magnétiquement avec le stator (1),
- un arbre (3, 3'), sur lequel le rotor (2) est monté et qui est monté sur le stator (1) pour tourner dans un premier sens et dans un deuxième sens contraire,
- un premier ventilateur (5) axial, qui est solidaire de l'arbre afin de se déplacer dans le premier sens de rotation,
- un deuxième ventilateur (6) axial, qui est solidaire de l'arbre du même côté du rotor (2) que le premier ventilateur (5) axial, en vue de se déplacer dans le deuxième sens de rotation,
**caractérisée en ce que**
- le premier ventilateur (5) axial est en roue libre sur l'arbre par rapport au deuxième sens de rotation et
- le deuxième ventilateur (6) axial est en roue libre sur l'arbre par rapport au premier sens de rotation.

2. Machine électrique suivant la revendication 1, dans laquelle le premier ventilateur (5) axial a un moyeu et une pale de ventilateur qui y est fixée et qui a, sur le pourtour du moyeu, un premier pas et dans laquelle le deuxième ventilateur (6) axial a un moyeu et une pale de ventilateur qui y est fixée, qui a, sur le pourtour du moyeu, à l'état monté des deux ventilateurs (5, 6) axiaux, un deuxième pas de sens contraire au premier pas.

3. Machine électrique suivant la revendication 1 ou 2, dans laquelle les deux ventilateurs (5, 6) axiaux sont montés sur l'arbre par un palier à roulement à blocage (7) de retenue.

4. Machine électrique suivant la revendication 1 ou 2, dans laquelle les deux ventilateurs (5, 6) axiaux sont montés sur l'arbre par respectivement un palier (15) à roulement et un dispositif (8) d'accouplement relié à l'arbre à complémentarité de forme ou par frottement, le premier ventilateur (5) axial dans le premier sens (13) de rotation et le deuxième ventilateur (6) axial dans le deuxième sens (11) de rotation.

5. Machine électrique suivant la revendication 4, dans laquelle le dispositif (8) d'accouplement a un volant, qui est appliqué en étant mobile en rotation, entre les deux ventilateurs (5, 6) axiaux, sur un filetage (10) de l'arbre et qui a respectivement une surface de frottement sur les côtés tournés vers les ventilateurs axiaux, et dans laquelle les deux ventilateurs (5, 6) axiaux ont chacun une surface (16) de frottement correspondante, pour ménager ainsi une liaison à frottement avec le volant en fonction du sens de rotation de l'arbre.

6. Machine électrique suivant la revendication 5, dans laquelle le dispositif (8) d'accouplement a un mécanisme d'encliquetage par lequel le volant est encliqueté par frottement, de manière amovible, en s'appliquant axialement, soit au premier ventilateur (5) axial, soit au deuxième ventilateur (6) axial.

7. Machine électrique suivant l'une des revendications précédentes, dans laquelle les deux ventilateurs (5, 6) axiaux sont montés d'un côté (B) de ventilation, entre le stator (1) et les ventilateurs (5, 6) axiaux est inséré un flasque (4), sur lequel l'arbre (3, 3') est monté, et un courant (17, 17') de fluide de refroidissement peut être véhiculé directement au stator et/ou au rotor en traversant le flasque dans la direction axiale.
